# EUROPÄISCHE PATENTANMELDUNG

(11) **EP 0 803 678 A2**
(43) Veröffentlichungstag der Anmeldung: **29.10.1997**
(21) Anmeldenummer: 97106724.4
(22) Anmeldetag: 23.04.1997
(51) Int. Cl.: F17C 13/08, B62B 1/26

(54) **Vorrichtung für die Aufnahme einer Gasflasche**

(30) Priorität: 24.04.1996 DE 29607409 U; 24.05.1996 DE 29609228 U; 04.11.1996 DE 29618981 U
(71) Anmelder: Reutemann, Gebhard, 87784 Wosterheim (DE)
(72) Erfinder: Reutemann, Gebhard, 87784 Westerheim (DE); Reutemann, Peter, 87746 Erkheim (DE)
(74) Vertreter: Pfister, Helmut, Dipl.-Ing.

(57) **Zusammenfassung**

Die Erfindung betrifft eine Vorrichtung für die Aufnahme einer Gasflasche, wobei die Gasflasche auf einer Standplatte der Vorrichtung steht und die Standplatte höhenverstellbar ist und eine Hebevorrichtung für die Höhenverstellung vorgesehen ist.

## Beschreibung

Die Erfindung betrifft eine Vorrichtung für die Aufnahme einer Gasflasche, wobei an der Vorrichtung eine Standplatte für die Gasflasche vorgesehen ist.

Die Verwendung von Gas im täglichen Leben ist weit verbreitet. Es ist bekannt, Gas z.B. in der Industrie, im Handel, im Handwerk, in Dienstleistungsbetrieben und im medizinischen Bereich, in Hallenbäder und vielen anderen Bereichen einzusetzen. Das Gas wird hierbei in Gasflaschen angeliefert. Das in den Gasflaschen vorhandene Gas erfüllt unterschiedlichste Aufgaben. Das Gas wird z.B. beim Schweißen verwendet. Das Gas ergibt hierbei z.B. eine abgeschlossene Atmosphäre, damit an dem Schweißpunkt eine optimale Schweißnaht entsteht. Sauerstoff, Stickstoff, Wasserstoff, Helium, Chlor, Kohlendioxid und viele weitere gasförmige Elemente bzw. Zusammensetzungen werden in Gasflaschen transportiert bzw. vorgehalten. Es ist z.B. bekannt, in Krankenhäuser spezielle Sauerstoffbehandlungen durchzuführen, bei denen der Sauerstoff in Sauerstoffgasflaschen vorgehalten wird. In Hallenbädern wird das Wasser durch Chlor aus Chlorgasflaschen desinfiziert. Die Verwendung all dieser Gasflaschen haben ein gemeinsames Problem.

Diese Gasflaschen weisen ein hohes Gewicht, typischerweise 70 Kilogramm und mehr auf. Der Transport dieser Gasflaschen ist beschwerlich und unter Umständen auch gefährlich, weil die Gasflaschen sehr unhandlich und nicht mit Tragehilfen ausgestattet sind. Die bekannten Standplatten weisen vom Boden einen gewissen Abstand auf. Dieser Abstand ist notwendig, damit die Vorrichtung, die z.B. auf Rollen oder Räder verfahrbar ist, eine gewisse Bodenfreiheit behält, oder der Bereich unter der Gasflasche für das Reinigen des Bodens, z.B. in Reinräumen oder im klinischen Bereich, freizuhalten. Das Beladen der Vorrichtung mit den Gasflaschen ist mit einem Hochheben der Gasflasche verbunden, wobei dies zum einen gesundheitliche Risiken beinhalten kann, zum anderen, beispielsweise wenn die Gasflasche sehr schlüpfrig ist, fast unmöglich ist.

Die Erfindung hat es sich zur Aufgabe gemacht, Vorrichtungen wie eingangs beschrieben dahingehend zu verbessern, daß ein Beladen der Vorrichtung mit der Gasflasche problemlos möglich ist.

Zur Lösung dieser Aufgabe geht die Erfindung aus von einer Vorrichtung wie eingangs beschrieben und schlägt vor, daß die Standplatte höhenverstellbar ist und eine Hebevorrichtung für die Höhenverstellung vorgesehen ist.

Durch die erfindungsgemäße Ausgestaltung ist es möglich, daß die Standplatte für das Beladen mit der Gasflasche bis auf den Boden absenkbar ist, die Gasflasche durch einfaches Verkippen unterfahren wird oder die Gasflasche auf die Standplatte aufgerollt wird. Für den Transport der Gasflasche kann nun die Standplatte der Gasflasche über die Hebevorrichtung angehoben werden, und die höhenverstellbare Standplatte wird soweit vom Boden angehoben, damit diese z.B. die gleiche Bodenfreiheit aufweist wie die mit Rollen versehene Vorrichtung. Durch die erfindungsgemäße Lösung wird auf das Hochheben der Gasflasche vollkommen verzichtet, eine Beeinträchtigung der Gesundheit der Bedienungsperson ist dadurch ausgeschaltet. Auch werden mögliche Unfallrisiken, die durch ein Entgleiten der Gasflasche entstehen können, vollkommen vermieden, da ein händisches Heben der Gasflasche nicht mehr notwendig ist.

In einer bevorzugten Ausgestaltung der Erfindung ist vorgesehen, daß als Hebevorrichtung ein drehbar gelagerter Handhebel vorgesehen ist, der über ein Hebeelement auf die Standplatte wirkt. Als Hebeelement ist hierbei zum Beispiel ein Seilzug, ein Gestänge, ein Getriebe oder eine Hydraulik vorgesehen. Der Handhebel wird durch eine Pumpbewegung oder eine Umlegebewegung betätigt und bewirkt durch das Hebeelement eine Höhenverstellung der Standplatte. Gleichwohl kann auch ein Kurbelantrieb mit einem Handhebel vorgesehen werden, wobei der Kurbelantrieb bzw. der Spindelantrieb über eine Haspel mit Seilzug oder über ein Schneckengetriebe als Hebevorrichtung auf die Höhenverstellung der Standplatte wirkt.

In einer weiteren bevorzugten Ausgestaltung der Erfindung ist vorgesehen, daß eine elektrische Hebevorrichtung vorgesehen ist. Die Gasflaschen werden z.B. beim Schweißen verwendet. Die Schweißapparate werden in aller Regel mit dem Stromnetz verbunden. Oftmals bewirkt der Strom das eigentliche Schweißen, und das Gas bewirkt nur eine Schutzgasatmosphäre. An der Hebevorrichtung kann ein Elektromotor mit Getriebe vorgesehen werden, der an die Stromversorgung des Schweißapparates angeschlossen wird und mit einer einfachen Steuerung ein Anheben und Absenken der Standplatte und der darauf befindlichen Gasflasche bewirkt.

Die erfindungsgemäße Vorrichtung ist sowohl als Nachrüstaggregat ausgestaltet, d.h. die Vorrichtung ist dazu geeignet, an bestehende Schweißapparate angebaut zu werden, oder aber die Vorrichtung ist in neu zu fertigende Schweißapparate integriert. Die erfindungsgemäße Vorrichtung dient sowohl dazu, nur eine, wie auch mehrere Gasflaschen aufzunehmen.

In einer weiteren bevorzugten Ausgestaltung der Erfindung ist vorgesehen, daß die Vorrichtung stationär insbesondere in einer Wand befestigbar ausgebildet ist.

In einer weiteren Ausgestaltung der Erfindung ist vorgesehen, daß die Vorrichtung an einem fahrbaren Gestell vorgesehen ist. Die Einsetzmöglichkeiten der Vorrichtung sind keineswegs begrenzt. Überall da, wo Gasflaschen entweder transportiert oder gelagert werden, besteht das Problem, daß diese auf eine Standplatte aufgestellt werden müssen, wodurch die eingangs geschilderten Probleme entstehen. Die Vorrichtung gemäß der Ausgestaltung der Erfindung kann somit stationär, also im wesentlichen unbeweglich ausgebildet sein. Hierzu ist z.B. vorgesehen, daß die Vorrichtung an einer Wand oder im Boden verankerbar ausgebildet ist.

Aber auch für den Transport der Gasflaschen ist es von Vorteil, wenn die Transportvorrichtung eine erfindungsgemäße Ausgestaltung aufweist. Gerade der Transport der Gasflaschen ist unter Umständen sehr gefährlich, da das Be- und Entladen zwei Gefahrenquellen im Umgang mit den Gasflaschen birgt.

Hervorzuheben ist hierbei, daß die erfindungsgemäße Vorrichtung bei der Verwendung an Schweißapparaten von Vorteil ist. Bei Schweißapparaten können eine oder mehrere Gasflaschen Verwendung finden. Der Gasverbrauch ist durchaus unterschiedlich und die Gasflaschen müssen gewechselt werden. Der Schweißapparat kann z.B. ein fahrbares Gestell oder Rollen oder dergleichen aufweisen. Der Schweißapparat kann aber auch stationär ausgebildet sein. Durch die erfindungsgemäße Ausgestaltung wird das Beladen bzw. Austauschen der Gasflaschen an dem Schweißapparat wesentlich erleichtert.

In der bevorzugten Ausgestaltung der Erfindung ist vorgesehen, daß als Hebevorrichtung das fahrbare Gestell dient, welches um eine horizontale Achse schwenkbar ist und die Standplatte mit einer Haltenase ausgestaltet ist, die bei Betätigung der Hebevorrichtung in einem Haltevorsprung einer Flaschenaufnahmestation eingreift und die Hebevorrichtung durch ein Zurückschwenken des Gestells die Gasflasche anhebt. Das fahrbare Gestell hat gemäß diesem Vorschlag nicht nur die Aufgabe, gleich einer Flaschenkarre, die Flaschen zu transportieren, sondern dient auch gleichzeitig als Hebevorrichtung, um ein Anheben der Gasflasche auf das entsprechende Abstellniveau der Gasflasche an einer Flaschenaufnahmestation zu bewirken. Eine Flaschenaufnahmestation ist hierbei z.B. die Standfläche der Gasflasche an einem Schweißapparat oder die Flaschenhalterung an einer Wand oder dergleichen. Dieser Flaschenkarren weist üblicherweise eine Achse mit zwei Rädern auf, wobei die Achse gleichzeitig als horizontale Achse dient, um welche das fahrbare Gestell verschwenkbar ist. Für den Transport ist es günstig, den Karren nach hinten zu schwenken und somit den Schwerpunkt des beladenen Karrens im wesentlichen über der Drehachse anzuordnen, wodurch ein leichter Transport der Gasflasche möglich ist. In dieser verschwenkten Stellung steht das vordere Ende der Standplatte mit einer oder mehreren Haltenasen vom Boden ab. Diese schräge Stellung wird dazu benützt, um die Haltenase in Eingriff mit an der Flaschenaufnahmestation vorgesehenen Haltevorsprüngen zu bringen. Durch eine entsprechende Anordnung der Standplatte bzw. dem Verschwenkwinkel können somit Höhenunterschiede von bis zu 30 cm überwunden werden. Wenn die Haltenase mit einem Haltevorsprung der Flaschenaufnahmestation verbunden ist, wird das fahrbare Gestell um die Horizontalachse zurückgeschwenkt, wodurch die Gasflasche wieder senkrecht gestellt wird. Gleichzeitig zieht sich die Standplatte an dem Haltevorsprung nach oben, wobei die Standplatte mit Längsführungen an dem fahrbaren Gestell befestigt ist.

Es ist günstig, wenn die Hebevorrichtung eine Absenksicherung aufweist. Diese Absenksicherung ist lösbar ausgestaltet und verhindert ein unbeabsichtigtes Herabgleiten der Hebevorrichtung.

In der bevorzugten Ausgestaltung der Erfindung ist vorgesehen, daß eine Feststellbremse für die Räder des fahrbaren Gestells vorgesehen ist und vor dem Lösen der Feststellbremse die Standplatte durch das Lösen der Absenksicherung absinkt. Durch eine solche Ausgestaltung wird erreicht, daß vor einem Transport der Gasflasche, hierzu ist das Lösen der Bremsen notwendig, sichergestellt wird, daß zunächst die Standplatte abgesenkt wird, wodurch ein sicherer Transport der Flasche erfolgt.

Durch eine vorteilhafte Ausgestaltung der Erfindung wird erreicht, daß die Feststellbremse und die Absenkvorrichtung durch einen gemeinsamen Bowdenzug nacheinander betätigbar sind. Der Bowdendruck ist verbunden mit einem Betätigungshebel. Im nicht betätigten Zustand drückt die Feststellbremse auf das Rad und verhindert ein Wegrollen des fahrbaren Gestells. Für ein Transportieren der Gasflasche auf dem fahrbaren Gestell ist somit ein Lösen der Feststellbremse notwendig, wobei wie beschrieben zuerst die Absenksicherung gelöst wird, wodurch die Gasflasche abgesenkt wird und dann die Feststellbremse lösbar ist. Die Verwendung eines Bowdenzuges mit variabler Länge in den Teilzügen für die Feststellbremse und die Absenksicherung stellt eine einfache aber sichere Lösung dar.

Weitere erfindungsgemäße Ausgestaltungen sind in den Unteransprüchen beschrieben.

In der Zeichnung ist die Erfindung schematisch dargestellt. Es zeigen:
- Fig.1: eine dreidimensionale Ansicht der erfindungsgemäßen Vorrichtung in einer angehobenen Stellung,
- Fig. 2: eine Frontansicht gemäß Fig. 1 und
- Fig. 3: eine weitere dreidimensionale Ansicht der erfindungsgemäßen Vorrichtung in einer abgesenkten Stellung,
- Fig. 4: in einer Seitenansicht eine weitere Ausgestaltung der erfindungsgemäßen Vorrichtung,
- Fig. 5: in einer Rückansicht eine weitere Ausgestaltung der erfindungsgemäßen Vorrichtung,
- Fig. 6: ein Detail gemäß Fig. 5 der erfindungsgemäßen Vorrichtung und
- Fig. 7: ein weiteres Detail gemäß Fig. 5 der erfindungsgemäßen Vorrichtung.

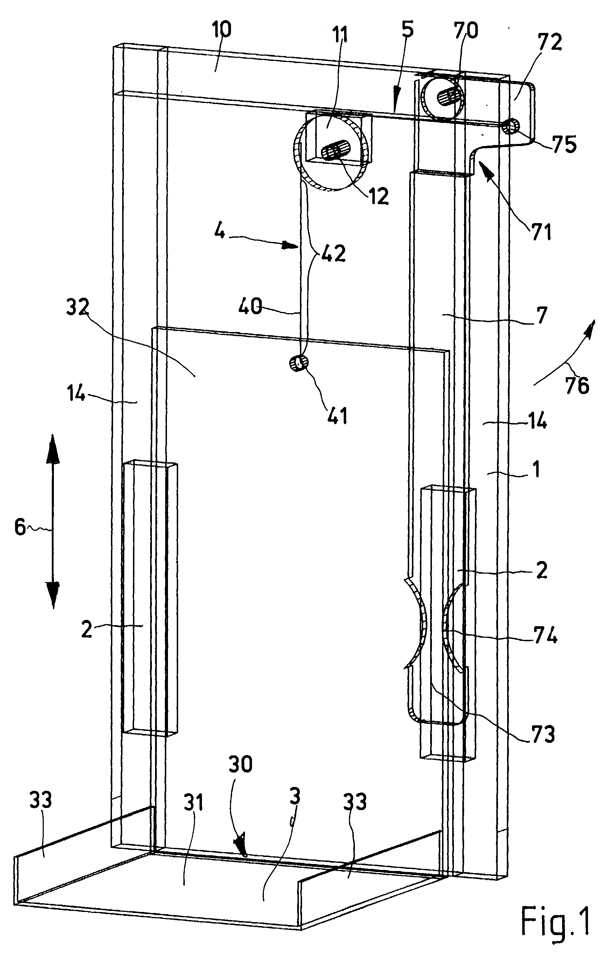

In Fig. 1 ist die erfindungsgemäße Vorrichtung gezeigt. Für eine bessere Übersichtlichkeit ist auf die Darstellung eines Schweißapparates, an dem die Vorrichtung z.B. vorgesehen ist, verzichtet worden. Genauso ist in der hier dargestellten hochgezogenen Stellung die Gasflasche nicht gezeigt.

Die Vorrichtung besteht im wesentlichen aus einem Rahmen 1, der zum Beispiel rechteckig ausgebildet ist und an seinen im wesentlichen senkrecht verlaufenden Holmen 14 Führungen 2 aufweist. Der Rahmen 1 ist beispielsweise aus verschweißten Holmen hergestellt, die Führungen 2 sind auf diesen Holmen aufgeschweißt.

Die Gasflasche steht auf der Standplatte 3. Die Standplatte 3 ist hierbei L-artig 30 ausgebildet, wobei die Gasflasche auf der im wesentlichen waagrecht ausgerichteten Standfläche 31 steht. Die Standfläche 31 bildet hierbei den kürzeren Schenkel der L-artig 30 ausgebildeten Standplatte 3. Das im wesentlichen senkrecht angeordnete Element 32 der Standplatte 3 ist in der Führung 2 derart geführt, daß die L-artige 30 Standplatte 3 eine Höhenverstellung entlang des Doppelpfeiles 6 ausführen kann.

In einer weiteren Ausgestaltung ist vorgesehen, daß die Standplatte 3 im wesentlichen eben ist und entsprechende Hebeelemente an der Standplatte 3 angreifen.

Für eine sichere Führung für die auf die Standfläche 31 gestellte Gasflasche weist die Standfläche 31 seitliche hochgebogene Ränder 33 auf. Für eine weitere Sicherung der Flasche sind entsprechende Mittel, z.B. Sicherungsketten usw. vorgesehen.

Für das Anheben bzw. Absenken der Standplatte 3 ist eine Hebevorrichtung 4 vorgesehen. Diese Hebevorrichtung 4 ist in der in Fig. 1 gezeigten Ausführung als Seilzug 40 ausgebildet, der am oberen Ende des senkrechten Elementes 32 am Angriffspunkt 41 angreift. Um ein Verkippen oder Verkanten der Standplatte 3 in der Führung 2 zu vermeiden, ist vorgesehen, daß der Angriffspunkt 41 möglichst in der Mitte der senkrechten Platte 32 am oberen Rand angeordnet ist.

Der Seilzug 40 greift an dem Angriffspunkt 41 an und wird über eine feststehende, sich drehende Rolle im wesentlichen rechtwinklig abgelenkt. Die Rolle 11 ist an dem oberen waagrechten Holm 10 derart vorgesehen, daß der Seilzug 40 im wesentlichen senkrecht verläuft.

Wenn man vor dem Rahmen 1 steht, ist auf der rechten Seite der Handhebel 7 vorgesehen. Der Handhebel 7 ist ebenfalls am oberen waagrechten Holm 10 in einem Drehpunkt 70 drehbar gelagert. Der Handhebel 7 ist L-artig 71 ausgebildet, wobei der kürzere Schenkel 72 deutlich kürzer ist als der lange Schenkel 73, an dem auch der Handgriff 74 vorgesehen ist.

An dem kurzen Schenkel 72 ist das umgelenkte Seil 40 im Anschlagpunkt 75 angeschlagen. Das Absenken der Standplatte 3 erfolgt durch ein Verschwenken des Handhebels 7 entsprechend der Verschwenkbewegung 76 entgegen dem Uhrzeigersinn. Durch diese Verschwenkbewegung 76 wird die Entfernung des Anschlagpunktes 75 von dem Drehpunkt 12 der Rolle 11 verkürzt und dadurch die nach unten wirksame Seillänge 42 verlängert. Hieraus resultiert ein Absenken der Standplatte 3.

Für den Handhebel 7 ist günstigerweise eine Selbstarretierung 5 vorgesehen. Durch die Selbstarretierung 5 wird bewirkt, daß der Handhebel 7 in einer selbst fixierten Lage stabil gehalten ist. Dadurch wird ein unbeabsichtigtes Absenken der Standplatte sicher vermieden, da für ein Absenken der Standplatte 3 zunächst der Handhebel 7 über die Selbstarretierung 5 bewegt werden muß, um eine Absenkung zu erreichen.

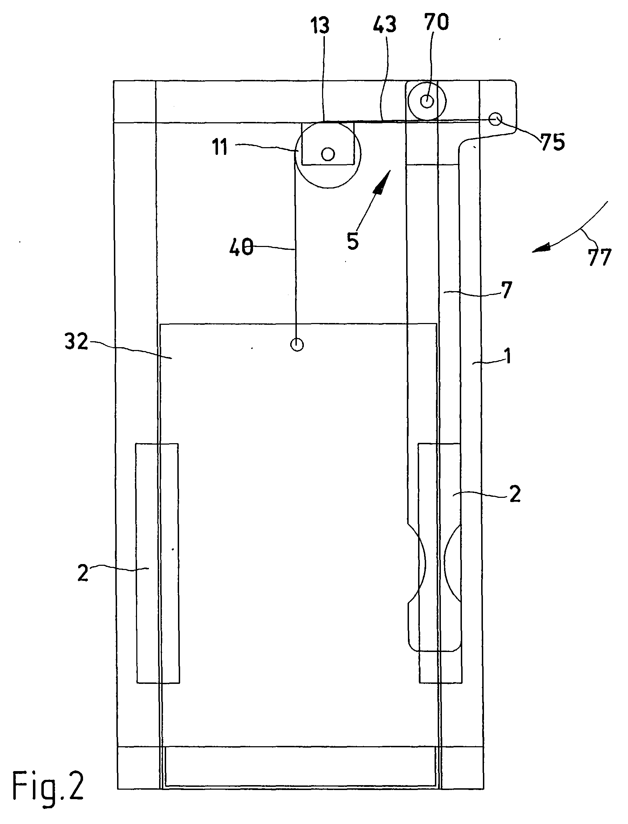

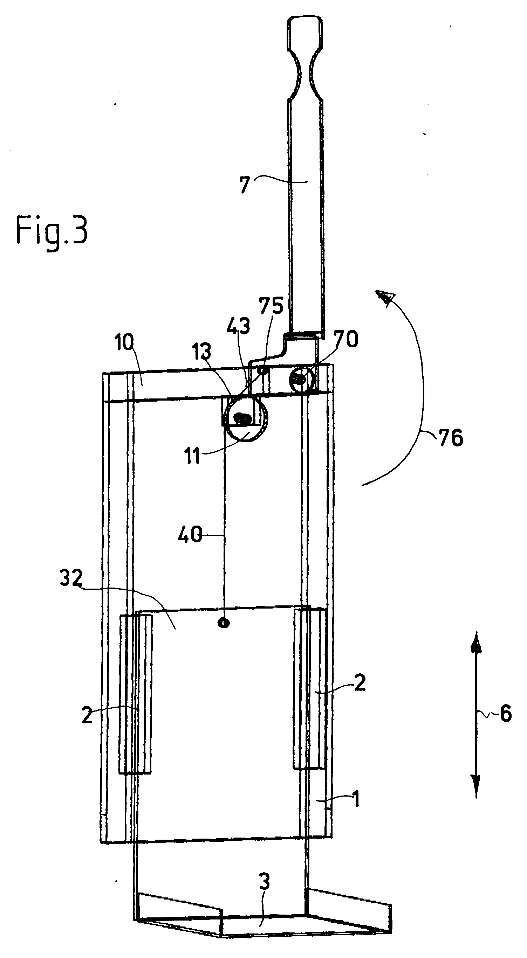

In Fig. 2 ist die Selbstarretierung 5 schematisch gezeigt. Das Seil 40 weist eine nach unten gerichtete Seillänge 42 und eine im wesentlichen waagrecht, in Fig. 3 auch schräg verlaufende Seillänge 43 auf. Das Gewicht der Standplatte mit der Gasflasche wird über den Seilzug 40 auf den Handhebel 7 gelenkt.

Hierzu ist die feststehende Rolle 11 vorgesehen, die die Wirkungsrichtung der Kraft umlenkt. Die Kraft verläuft immer parallel zu den jeweiligen Seilstücken, also im wesentlichen waagrecht zwischen der Rolle 11 und dem Anschlangpunkt 75. Die resultierende Gewichtskraft wirkt also zwischen dem Anschlagpunkt 75 und dem Anlagepunkt 13 des Seiles 40 an der Rolle 11 und verläuft in der hochgezogenen, abgefahrenen Stellung unterhalb des Drehpunktes 70 des Handhebels 7. Durch diese Ausgestaltung wird günstigerweise ein um den Drehpunkt 70 im Uhrzeigersinn wirkendes Drehmoment 77 erzeugt, das den Handhebel 7 gegen den Rahmen 1 drückt. Für eine Begrenzung der Bewegung des Handhebels 7 ist z.B. ein nicht weiter dargestellter Anschlag an dem Rahmen 1 vorgesehen.

Hierbei ist es günstig, daß für den Handhebel 7 eine Verschwenkbewegung 76 um den Drehpunkt 70 von 180° möglich ist.

In Fig. 3 ist die abgesenkte Stellung der Standplatte 3 gezeigt. In dieser Stellung kann die Standplatte 3 mit der Gasflasche beladen werden. Der Rahmen 1 ist hierbei so ausgebildet, daß dieser nicht bis an den Boden reicht, sondern von dem Boden einen gewissen Abstand einhält. Bei dieser Ausgestaltung beeinträchtigt der Rahmen 1 nicht die Bodenfreiheit des z.B. verfahrbaren Schweißapparates. Die Unterkante des Rahmens 1 schließt z. B. mit der Gehäuseunterkante des Schweißapparates ab. Wie oben beschrieben, bewirkt der nach oben geschwenkte Handhebel 7 ein Absenken der Standplatte 3. Die zwischen dem Anschlagpunkt 75 und der Rolle 11 verlaufende Seillänge 43 ist hierbei aus der Waagrechten nach oben um einen Winkel von ca. 45° geneigt. Die Seillänge 43 ist gegenüber der Ausgestaltung in Fig. 2 deutlich verkürzt, wodurch die Absenkung der Standplatte 3 erreicht wird. Für den Handhebel 7 ist an dem oberen, waagrechten Holm 10 ein nicht dargestellter Anschlag vorgesehen, der ein Umkippen des Handhebels 7 verhindert.

Die erfindungsgemäße Vorrichtung kann auch mit mehr als einer Umlenkrolle ausgestattet sein, um die das Seil zum Anheben der Standplatte geführt ist. Es ist auch möglich, daß auf die L-artig ausgebildete Standplatte verzichtet wird und eine im wesentlichen ebene Standplatte verwendet wird, an die das Hebemittel angreift.

Bei der L-artigen Ausgestaltung der Standplatte ist es von Vorteil, daß die Standplatte, insbesondere wenn die Vorrichtung gekippt verwendet wird, gleichzeitig eine Führung bzw. Anschlag für die Gasflasche bildet.

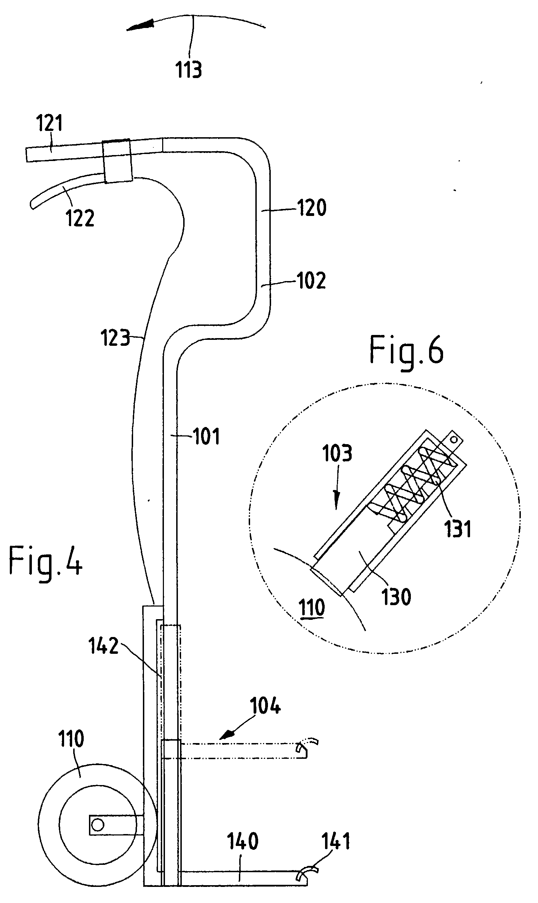

In Fig. 4 ist eine weitere Ausgestaltung der Erfindung gezeigt. Die erfindungsgemäße Vorrichtung ist hier kombiniert mit einem an sich bekannten Flaschenkarren. Das besondere bei dieser Ausgestaltung liegt nun darin, daß in dieser Kombination problemlos eine Flasche transportiert werden kann und dann durch die Hebevorrichtung 104 auf ein entsprechendes Niveau angehoben wird, um diese in eine entsprechende Flaschenaufnahmestation zu übergeben.

Das Gestell 102 weist Räder 110 auf, die um eine Achse 111 drehbar gelagert sind. Umgekehrt ist auch das Gestell 101 bzw. der Flaschenwagen 102 um diese Achse 111, die hier gleichzeitig als horizontale Achse 112 wirkt, verschwenkbar.

Der Flaschenwagen 102 weist zwei im wesentlichen parallel, nach oben verlaufende Streben 120 auf. Die Streben 120 bilden im oberen Bereich die Handgriffe 121. Die Streben 120 sind hierbei so angeordnet, daß zwischen ihnen die Gasflasche problemlos Platz findet. Hierzu sind die Streben 120 im oberen Bereich des Flaschenwagens 2 nach vorne gebogen und beschreiben dann ein U, das sich in Richtung auf den Handgriff 121 anschließt. Durch eine winklige Anstellung der Streben 120 wird eine Trichterform erreicht, die die Gasflaschen optimal umfassen und sichern. Zusätzlich können nicht weiter dargestellte Schlingketten vorgesehen sein, die ein unbeabsichtigtes Herausgleiten der Flaschen sicher vermeiden.

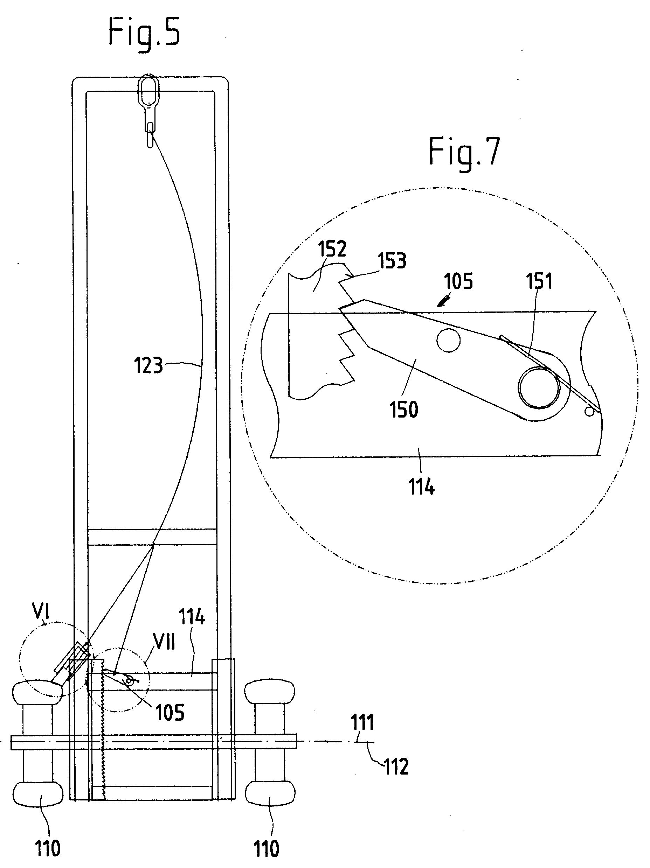

An dem Handgriff 121 ist ein Betätigungshebel 122 angeordnet. Durch diesen Betätigungshebel 122 wird zum einen eine Bremse 103 und zum anderen die Absenksicherung 105 bei Bedarf gelöst. Die Bremse 103 und die Absenksicherung 105 sind hierbei durch einen gemeinsamen Bowdenzug 123 mit dem Betätigungshebel 122 verbunden. Durch eine Betätigung des Betätigungshebels 122 werden also gleichzeitig sowohl die Bremse 3 wie auch die Absenksicherung 5 betätigt. Im unbetätigten Zustand wird der Flaschenwagen 102 durch die Bremse 103 fixiert. Es ist z.B. vorgesehen, entweder nur eine Bremse, wie in Figur 5 gezeigt, oder auf jedes Rad eine wirkende Bremse 103 anzuordnen. Durch diese Ausgestaltung wird erreicht, daß ein unbeabsichtigtes Wegrollen des Flaschenwagens 2 vermieden wird.

Der Bowdenzug 123 wirkt auch auf die Absenksicherung 105, wobei diese gelöst wird, wenn der Betätigungshebel 22 gedrückt wird. Dadurch erfolgt eine Absenkung der Standplatte 140 in die niedrigste Position, wie diese zum Transportieren der Gasflaschen von Vorteil ist. Günstigerweise wird in der niedrigsten Position der Standplatte 140 die Gasflasche vom Boden auf den Flaschenwagen 102 gestellt, wobei dies durch ein einfaches Verkippen der Gasflasche und durch gleichzeitiges Unterfahren der Gasflasche mit der Standplatte 40 erreicht wird. Üblicherweise wird das Gestell 101 entgegen dem Uhrzeigersinn in Richtung des Pfeils 113 nach hinten geschwenkt, um die Flasche zu transportieren.

Die Standplatte 140 weist seitliche Wangen auf, um der Gasflasche im unteren Bereich einen seitlichen Halt zu geben.

Zur Hebevorrichtung 104 gehören insbesondere Haltenasen 141 am vorderen Ende der Standplatte 140. Es ist vorgesehen, daß die Standplatte 140 z.B. L-winklig ausgebildet ist und in dem im wesentlichen vertikal verlaufenden Abschnitt Führungen 142 aufweist, mit deren Hilfe die Standplatte 140 an dem Gestell 101 im wesentlichen vertikal verschiebbar ist.

In Fig. 4 ist die obere Position der Standplatte 140 gestrichelt gekennzeichnet. Diese Position wird z.B. dadurch erreicht, daß die Haltenasen 141, wenn der Flaschenwagen 102 zum Transport entsprechend verschwenkt ist, in an Flaschenaufnahmestationen vorgesehenen Haltevorsprüngen eingreift. In diesem Moment ist die Flasche noch nicht angehoben worden. Wird nun das Gestell 1 um die horizontale Achse 112, die hier der Welle 111 der Räder 110 entspricht, im Uhrzeigersinn, also gegen den Pfeil 113 nach vorne, geschwenkt, so bewegt sich die Standplatte 140 in ihren Führungen 142 nach oben, da die Haltenase 141 mit den nicht weiter gezeigten Haltevorsprüngen der Flaschenaufnahmestation auf einem entsprechenden Niveau gehalten wird. Diese Ausgestaltung hat insbesondere den Vorteil, daß die Plattform 104 problemlos genau das richtige Niveau der Flaschenaufnahmestation erreicht, ohne aufwendige Justier- oder Nachregelarbeiten. Ein Umladen der Gasflasche von dem Flaschenwagen 102 auf die nicht weiter dargestellte Flaschenaufnahmestation ist problemlos möglich. Es ist auch möglich, die Standplatte 140 etwas überhalb dem Niveau der Flaschenaufnahmestation anzuordnen, um dadurch ein leichtes Umsetzen aufgrund des Gefälles zu erreichen.

Während des Umsetzens der Flasche von dem Gestell auf die Aufnahmestation oder umgekehrt ist günstigerweise der Bedienungshebel 122 nicht gedrückt und die Feststellbremse 3 hält den Flaschenwagen 2 in ein und derselben Position. Es ist auch möglich, den Handbetätigungshebel 122 leicht zu betätigen, um ein unvermeidliches Versetzen der Räder 110 während des Aufrichtvorganges zu ermöglichen.

Nachdem die Gasflasche umgesetzt ist, sei es, daß die Gasflasche auf die Aufnahmestation aufgesetzt oder von dieser eine leere Gasflasche auf den Flaschenwagen 102 gesetzt wird, wird die Haltenase 141 von dem Haltevorsprung abgelöst, das z.B. durch ein einfaches Nach-hinten-Schwenken 113 erfolgen kann. Wird nun der Betätigungshebel 122 betätigt, wird zunächst die Absenksicherung 105 gelöst und es erfolgt ein Absenken der Standplatte 140 in der Führung 142.

Erfindungsgemäß wird zunächst eine Absenkung vorgeschlagen und erst dann eine Freigabe der Bremse 103. Dies kann z.B. durch entsprechende unterschiedlich lange Teilstücke des Bowdenseilzuges erreicht werden, wobei die Bremse 103 erst bei einem größeren Betätigungsweg des Betätigungshebels 122 gelöst wird.

In Fig. 7 ist die Funktionsweise der Absenksicherung 105 angedeutet. An der Strebe 114 des Gestells 101 ist ein drehbar gelagerter Hebel 150 angeordnet, an dem der Bowdenzug 123 angreift. Der Bowdenzug 123 wirkt hierbei gegen die Kraft einer Feder 151, die bewirkt, daß der Hebel 150 an seinem vorderen Ende in einer Zahnstange 152 eingreift. Die Zahnstange 152 ist mit der Standplatte 140 verbunden und bewegt sich mit dieser von der niedrigsten in die höchste Position. Die Feder 151 bewirkt ein sicheres Einschnappen des Hebels 50 zwischen den Zähnen 153 der Zahnstange 152, wie dies z.B. bei einer Hochfahrbewegung der Hebelvorrichtung 104 erfolgt. Die Absenkbewegung, die durch ein Lösen der Absenksicherung 105 erfolgt, kann z.B. durch entsprechende pneumatische Stoßdämpfer oder dergleichen gebremst werden.

In Fig. 6 ist die Bremse 103 dargestellt. Ein Bremsbacken 130 wird durch eine Feder 131 auf das Rad 110 gedrückt. Der Bowdenzug 123 greift in einer Öse des Bremsbackens 130 an und zieht gegen die Kraft der Feder 131 den Bremsbacken 130 von dem Rad 110 weg und gibt dieses frei.

Neben der Verwendung der hier vorgestellten zweiten Ausgestaltung an der Hebevorrichtung 104 in Verbindung mit einem Flaschenwagen 102 ist es auch möglich, die eingangs beschriebene Hebevorrichtung mit dem Handhebel an einem Flaschenwagen 102 anzuordnen.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Vorrichtung für die Aufnahme einer Gasflasche, wobei an der Vorrichtung eine Standplatte für die Gasflasche vorgesehen ist, **dadurch gekennzeichnet, daß** die Standplatte (3) höhenverstellbar ist und eine Hebevorrichtung (4) für die Höhenverstellung (6) vorgesehen ist.

2. Vorrichtung nach Anspruch 1, **dadurch gekennzeichnet, daß** als Hebevorrichtung (4) ein drehbar gelagerter Handhebel (7) vorgesehen ist, der über ein Hebeelement auf die Standplatte (3) wirkt.

3. Vorrichtung nach einem oder beiden der vorhergehenden Ansprüche, **dadurch gekennzeichnet, daß** als Hebeelement ein Seilzug (40) vorgesehen ist.

4. Vorrichtung nach einem oder mehreren der vorhergehenden Ansprüche, **dadurch gekennzeichnet, daß** die Hebevorrichtung (4), insbesondere der Handhebel (7), eine Selbstarretierung (5) aufweist.

5. Vorrichtung nach einem oder mehreren der vorhergehenden Ansprüche, **dadurch gekennzeichnet, daß** die Standplatte (3) L-artig (30) ausgebildet ist, in einem Rahmen (1) der Vorrichtung höhenverschiebbar geführt ist und an dem nach oben stehenden Schenkel des L's das Seil (40) angreift, wobei das Seil (40) über eine feststehende Rolle (11) umgelenkt ist und mit dem Handhebel (7) verbunden ist.

6. Vorrichtung nach einem oder mehreren der vorhergehenden Ansprüche, **dadurch gekennzeichnet, daß** in der angehobenen Stellung der Standplatte (3) der Handhebel (7) nach unten orientiert ist, der Drehpunkt (70) des Handhebels (7) oben angeordnet ist und das Seil (40) zwischen der Rolle (11) und dem Angriffspunkt (75) an dem Handhebel (7) unterhalb des Drehpunktes (70) verläuft und eine Selbstarretierung (5) bewirkt.

7. Vorrichtung nach einem oder mehreren der vorhergehenden Ansprüche, **dadurch gekennzeichnet, daß** der Handhebel (7) im wesentlichen L-artig (71) ausgebildet ist und das Seil (40) an dem kürzeren Schenkel (72) des L's (71) angreift.

8. Vorrichtung nach einem oder mehreren der vorhergehenden Ansprüche, **dadurch gekennzeichnet, daß** eine elektrische Hebevorrichtung (4) vorgesehen ist.

9. Vorrichtung nach einem oder mehreren der vorhergehenden Ansprüche, **dadurch gekennzeichnet, daß** der Handhebel (7) um den Drehpunkt (70) um einen Winkel von bis zu 180° schwenkbar ist.

10. Vorrichtung nach einem oder mehreren der vorhergehenden Ansprüche, **dadurch gekennzeichnet, daß** die Vorrichtung stationär, insbesondere an einer Wand befestigbar ausgebildet ist.

11. Vorrichtung nach einem oder mehreren der vorhergehenden Ansprüche, **dadurch gekennzeichnet, daß** die Vorrichtung an einem fahrbaren Gestell (101) vorgesehen ist.

12. Vorrichtung nach einem oder mehreren der vorhergehenden Ansprüche, **dadurch gekennzeichnet, daß** als Hebevorrichtung (104) das fahrbare Gestell (102) dient, welches um eine horizontale Achse (112) schwenkbar ist und die Standplatte (140) mit einer Haltenase (141) ausgestaltet ist, die bei Betätigung der Hebevorrichtung (104) in einen Haltevorsprung einer Flaschenaufnahmestation eingreift und die Hebevorrichtung (104) durch ein Zurückschwenken des Gestells die Gasflasche anhebt.

13. Vorrichtung nach einem oder mehreren der vorhergehenden Ansprüche, **dadurch gekennzeichnet, daß** die Hebevorrichtung (104) eine Absenksicherung (105) aufweist.

14. Vorrichtung nach einem oder mehreren der vorhergehenden Ansprüche, **dadurch gekennzeichnet, daß** eine Feststellbremse (103) für die Räder (110) des fahrbaren Gestells (101) vorgesehen ist und vor dem Lösen der Feststellbremse (103) die Standplatte (140) durch das Lösen der Absenksicherung (105) absinkt.

15. Vorrichtung nach einem oder mehreren der vorhergehenden Ansprüche, **dadurch gekennzeichnet, daß** die Feststellbremse (103) und die Absenksicherung (105) durch einen gemeinsamen Bowdenzug (123) nacheinander betätigbar sind.

16. Schweißapparat, wobei für das Schweißen Gas in der Gasflasche vorgesehen ist mit einer Vorrichtung nach einem oder mehreren der vorhergehenden Ansprüche.
